# EUROPÄISCHE PATENTSCHRIFT

(11) **EP 4 196 359 B1**
(45) Veröffentlichungstag und Bekanntmachung des Hinweises auf die Patenterteilung: **29.10.2025**
(21) Anmeldenummer: 21746037.7
(22) Anmeldetag: 19.07.2021
(51) Int. Cl.: B60G 17/017

(54) **VERFAHREN ZUM ANKOPPELN EINES AUFLIEGERS AN EIN ZUGFAHRZEUG UND FAHRZEUG**
METHOD FOR COUPLING A TRAILER TO A TOWING VEHICLE AND VEHICLE
PROCÉDÉ DE COUPLAGE D'UNE REMORQUE À UN VÉHICULE TRACTEUR ET VÉHICULE

(30) Priorität: 17.08.2020 DE 102020121497
(43) Veröffentlichungstag der Anmeldung: 21.06.2023
(73) Patentinhaber: ZF CV Systems Global GmbH, 3006 Bern (CH)
(72) Erfinder: SABELHAUS, Dennis, 31737 Rinteln (DE)
(74) Vertreter: Rabe, Dirk-Heinrich
(86) Internationale Anmeldenummer: PCT/EP2021/070079
(87) Internationale Veröffentlichungsnummer: WO 2022/037866

(56) Entgegenhaltungen:
- EP-A1- 2 401 165
- DE-A1- 102016 011 323

## Beschreibung

Die Erfindung betrifft ein Verfahren zum Ankoppeln eines Aufliegers an ein Zugfahrzeug sowie ein Fahrzeug aus einem Zugfahrzeug und einem Anhänger.

Aus dem Stand der Technik sind Verfahren bekannt, bei denen ein Zugfahrzeug an ein Zielobjekt, beispielsweise einen Auflieger, heranfährt, um an diesen anzudocken. Dies erfolgt meist mit großem Aufwand, indem der Fahrer eine Höhe einer Kupplungsplatte am Zugfahrzeug, in der ein Königszapfen des Aufliegers aufgenommen und fixiert werden kann, manuell einstellt und das Zugfahrzeug anschließend an den Auflieger annähert. Anschließend wird die Kupplungsplatte manuell überwacht an den Königszapfen angenähert, um diesen in der Kupplungsplatte zu fixieren.

Zur Erleichterung diese Ankoppelvorgangs sind bereits Verfahren aus der DE 10 2006 057 610 A1, DE 10 2014 110 498 A1, DE 10 2019 104 352 A1, WO2007102777A1, EP 1 740 400 B1 und der EP 1 874 616 B1 bekannt. Um einen möglichst schnellen und sanften Ankoppelvorgang zu ermöglichen, bei dem Schäden an dem Königszapfen und/oder der Kupplungsplatte vermieden werden, ist in DE 10 2016 011 323 A1 weiterhin vorgesehen, dass der Kontakt der Kupplungsplatte des Zugfahrzeugs mit der Sattelplatte des Sattelaufliegers, die oberhalb des Königszapfens liegt, durch eine Änderung der Stellgeschwindigkeit bzw. eines Ist-Höhengradienten ermittelt wird, wobei der Ist-Höhengradient die Änderung der Höhe zwischen der wenigstens einen Hinterachse des Zugfahrzeugs und einem Fahrzeugaufbau, an der die Kupplungsplatte befestigt ist, angibt. Liegt eine Änderung vor, so kann darauf geschlossen werden, dass die Kupplungsplatte durch die Sattelplatte belastet wird, da sich die Stellgeschwindigkeit verringert hat. Nachteilig hierbei ist, dass eine Änderung in der Stellgeschwindigkeit bzw. dem Ist-Höhengradienten nicht zwangsläufig aus einer Berührung der Sattelplatte und der Kupplungsplatte resultiert.

Aufgabe der Erfindung ist daher, ein Verfahren zum Ankoppeln eines Aufliegers an ein Zugfahrzeug anzugeben, das schnell und einfach durchzuführen ist und einen zuverlässigen Ankoppelvorgang ermöglicht. Aufgabe ist weiterhin, eine Ankoppel-Steuereinrichtung und ein Fahrzeug bereitzustellen.

Diese Aufgabe wird durch ein Verfahren nach Anspruch 1 sowie ein Fahrzeug gemäß dem weiteren unabhängigen Anspruch gelöst. Die Unteransprüche geben bevorzugte Weiterbildungen an.

Erfindungsgemäß ist demnach ein Verfahren zum Ankoppeln eines Aufliegers an ein Zugfahrzeug vorgesehen, wobei das Zugfahrzeug ein Fahrgestell und eine daran angeordnete Kupplungsplatte und der Auflieger eine Sattelplatte mit einem Königszapfen aufweist, wobei der Königszapfen im angekoppelten Zustand durch eine Verriegelungsvorrichtung schwenkbar an der Kupplungsplatte fixiert werden kann. Das Zugfahrzeug weist ferner ein Niveauregelsystem auf, wobei sich eine Höhe des Fahrgestells gegenüber mindestens einer Hinterachse des Zugfahrzeuges durch eine manuelle oder automatisierte Ansteuerung des Niveauregelsystems verändern lässt. Das Verfahren beinhaltet dabei mindestens die folgenden Schritte:
- Einlesen eines Referenz-Höhenverlaufes, wobei der Referenz-Höhenverlauf unterschiedlichen Ist-Höhenwerten für die Höhe des Fahrgestells gegenüber der mindestens einen Hinterachse einen Referenz-Höhengradienten zuordnet;
- Verändern der Höhe des Fahrgestells gegenüber der mindestens einen Hinterachse derartig, dass sich die Kupplungsplatte des Zugfahrzeuges an die Sattelplatte des Aufliegers annähert;
- fortlaufendes Ermitteln von Ist-Höhenwerten und von Ist-Höhengradienten während des Veränderns der Höhe des Fahrgestells gegenüber der mindestens einen Hinterachse, wobei einem Ist-Höhenwert der aktuell ermittelte Ist-Höhengradient zugeordnet wird;
- Prüfen eines Ankoppelkriteriums durch Vergleichen eines aktuell ermittelten Ist-Höhengradienten mit einem Referenz-Höhengradienten, wobei der Referenz-Höhengradient herangezogen wird, der in dem eingelesenen Referenz-Höhenverlauf demselben Ist-Höhenwert zugeordnet ist wie der aktuell ermittelte Ist-Höhengradient;
- Beibehalten der Höhe des Fahrgestells gegenüber der mindestens einen Hinterachse bei Erfüllen des Ankoppelkriteriums, wobei das Ankoppelkriterium erfüllt ist, wenn der aktuell ermittelte Ist-Höhengradient von dem Referenz-Höhengradienten abweicht.

Vorzugsweise kann das Zugfahrzeug anschließend derartig an den Auflieger angenähert werden, dass der Königszapfen in einem Aufnahmeschlitz der Kupplungsplatte aufgenommen wird. Dadurch kann dieser über eine Verriegelungsvorrichtung fixiert werden, um den Ankoppelvorgang vollständig abzuschließen.

Vorteilhafterweise kann durch das erfindungsgemäße Verfahren also erreicht werden, dass auf eine Berührung der Kupplungsplatte mit der Sattelplatte erst dann geschlossen wird, wenn der Ist-Höhengradient von dem Referenz-Höhengradient abweicht. Daher ist der Indikator für dieses Ereignis nicht mehr eine Veränderung des Ist-Höhengradienten an sich, wie im Stand der Technik angegeben, sondern die Abweichung von der Referenz. Dies ist insbesondere dann vorteilhaft, wenn das Fahrgestell beim Annähern der Kupplungsplatte an die Sattelplatte aufgrund von systeminternen Einstellung des Niveauregelsystems mit einer veränderten Stellgeschwindigkeit und damit einem veränderten Ist-Höhengradienten nach oben verfahren wird, ohne dass eine geänderte Belastung auf die Kupplungsplatte wirkt. Das Prüfen des Ankoppelkriteriums wird dadurch sicherer und der Ankoppelvorgang kann zuverlässiger und ohne Fehlinterpretationen durchgeführt werden.

Vorzugsweise ist dazu weiterhin vorgesehen, dass der Referenz-Höhenverlauf vorab ermittelt wird, ohne dass die Kupplungsplatte des Zugfahrzeuges belastet wird, wobei dazu die Höhe des Fahrgestells gegenüber der mindestens einen Hinterachse zwischen einem ersten Höhenwert, beispielsweise einer Minimalhöhe, und einem zweiten Höhenwert, beispielsweise einer Maximalhöhe, einmalig oder mehrmalig verändert wird und während des Veränderns der Höhe des Fahrgestells gegenüber der mindestens einen Hinterachse fortlaufend Ist-Höhenwerte und Ist-Höhengradienten ermittelt werden, wobei einem Ist-Höhenwert der aktuell ermittelte Ist-Höhengradient als Referenz-Höhengradient zugeordnet und in dem Referenz-Höhenverlauf abgespeichert wird.

Dadurch wird eine einfache Ermittlung des Referenz-Höhenverlaufes ermöglicht, was insbesondere unmittelbar vor dem Ankoppelvorgang erfolgen kann, so dass auf eine aktuelle Referenz zurückgegriffen werden kann, die das aktuelle systeminterne Verhalten des Niveauregelsystems widerspiegelt.

Vorzugsweise ist weiterhin vorgesehen, dass der Ist-Höhengradient und/oder der Referenz-Höhengradient durch ein zeitlich versetztes Bestimmen von Ist-Höhenwerten erfolgt, wobei der zeitliche Versatz zwischen 100ms und 300ms beträgt. Dadurch wird eine einfache Ermittlung des jeweiligen Gradienten ermöglicht, wobei der zeitliche Versatz derartig gewählt ist, dass auf eine Berührung der Sattelplatte und der Kupplungsplatte rechtzeitig reagiert werden kann.

Vorzugsweise ist weiterhin vorgesehen, dass das Einstellen der Höhe über das Niveauregelsystem durch Festlegen eines Soll-Höhenwertes erfolgt. Daher kann in dem Verfahren, beispielsweise durch eine erfindungsgemäße Ankoppel-Steuereinrichtung, im jeweiligen Schritt des Verfahrens, ein Verändern der Höhe in einfacher Weise angewiesen werden. Dies kann vorzugsweise über einen Datenbus im Fahrzeug, insbesondere dem CAN-Bus, erfolgen, wodurch sich der Aufwand verringert, da das Niveauregelsystem ohnehin mit einem solchen Datenbus verbunden ist.

Vorzugsweise ist weiterhin vorgesehen, dass das Verändern der Höhe des Fahrgestells gegenüber der mindestens einen Hinterachse zum Annähern der Kupplungsplatte des Zugfahrzeuges an die Sattelplatte des Aufliegers erfolgt, nachdem die Sattelplatte des Aufliegers zumindest anteilig mit der Kupplungsplatte des Zugfahrzeuges in Überdeckung gebracht wurde, vorzugsweise durch ein manuelles oder automatisiertes Annähern des Zugfahrzeuges an den Auflieger. Dadurch wird sichergestellt, dass bei einer Veränderung der Höhe die Sattelplatte auf die Kupplungsplatte einwirken kann, um eine Abweichung des Ist-Höhengradienten vom Referenz-Höhengradienten feststellen zu können.

Vorzugsweise ist dabei vorgesehen, dass die Höhe des Fahrgestells gegenüber der mindestens einen Hinterachse des Zugfahrzeuges vor dem in Überdeckung Bringen der Kupplungsplatte und der der Sattelplatte derartig eingestellt wird, dass sich die Kupplungsplatte und die Sattelplatte beim in Überdeckung Bringen nicht berühren. Dadurch kann sichergestellt werden, dass sich beide Platten erst dann berühren, wenn diese über das Niveauregelsystem gezielt aneinander angenähert werden. Eine Beschädigung der Platten sowie des Königszapfens kann dadurch vermieden werden.

Ergänzend kann dazu vorgesehen sein, dass das in Überdeckung Bringen der Kupplungsplatte und der der Sattelplatte derartig erfolgt, dass der Königszapfen die Kupplungsplatte nicht überdeckt, wobei zwischen der Kupplungsplatte und dem Königszapfen ein Sicherheitsabstand eingehalten wird. Dadurch kann verhindert werden, dass der Königszapfen beim Anheben des Fahrgestells nicht gegen die Kupplungsplatte drückt, wenn die Sattelplatte gegenüber der Kupplungsplatte nicht exakt ausgerichtet ist. Dadurch kann zudem verhindert werden, dass eine Abweichung von dem Referenz-Höhengradienten festgestellt wird, wenn der Königszapfen ungewollterweise gegen die Kupplungsplatte gelangt. Erst durch ein nachfolgendes Annähern des Zugfahrzeuges an den Auflieger gelangt der Königszapfen in den Aufnahmeschlitz der Kupplungsplatte, wobei deren Ausrichtung zueinander vorher noch geprüft werden kann.

Vorzugsweise ist weiterhin vorgesehen, dass das Ankoppelkriterium erfüllt ist, wenn der aktuell ermittelte Ist-Höhengradient einen Gradienten-Schwellwert unterschreitet, wobei der Gradienten-Schwellwert (dHS) in Abhängigkeit eines Toleranzfaktors (T) aus dem Referenz-Höhengradienten (dHR) ermittelt wird, vorzugsweise aus dHS = T x dHR. Dadurch wird sichergestellt, dass auf eine Berührung zwischen der Kupplungsplatte und der Sattelplatte nicht bereits bei jeglichen Abweichungen geschlossen wird, da diese auch messtechnisch bedingt sein können. Vorzugsweise ist dabei vorgesehen, dass der Toleranzfaktor zwischen 0,7 und 0,85 liegt, vorzugsweise bei 0,8. Bei einer Abweichung von zwischen mindestens 15% und mindestens 30%, vorzugsweise mindestens 20% kann mit hoher Sicherheit davon ausgegangen werden, dass eine Berührung erfolgt ist.

Vorzugsweise ist weiterhin vorgesehen, dass für das Erfüllen des Ankoppelkriteriums ergänzend geprüft wird, ob ein Ist-Achslastwert, der eine Achslast auf die mindestens eine Hinterachse bei Vorliegen einer Abweichung zwischen dem aktuell ermittelten Ist-Höhengradienten und dem Referenz-Höhengradienten angibt, von einer Referenz-Achslast, die vor dem Verändern der Höhe des Fahrgestells gegenüber der mindestens einen Hinterachse ermittelt wird, nach oben hin abweicht. Vorteilhafterweise kann also durch eine Auswertung der Achslast darauf geschlossen werden, ob der Auflieger zusätzlich auf das Fahrgestell bzw. die Hinterachse einwirkt. Dadurch kann eine Plausibilisierung erfolgen. Im Speziellen kann dabei vorgesehen sein, dass das Ankoppelkriterium erfüllt ist, wenn eine Achslast-Differenz zwischen der Referenz-Achslast und dem Ist-Achslastwert bei Vorliegen einer Abweichung zwischen dem aktuell ermittelten Ist-Höhengradienten und dem Referenz-Höhengradienten darauf hinweist, dass sich die Achslast auf die mindestens eine Hinterachse um mehr als 1t verändert hat. Dies ist ein sicheres Kriterium, ob der Auflieger über die Kupplungsplatte auf die Hinterachse einwirkt.

Vorzugsweise ist dabei vorgesehen, dass der Ist-Achslastwert und/oder die Referenz-Achslast über das Niveauregelsystem ermittelt wird. Vorteilhafterweise sind also keine weiteren Sensoren für eine derartige Plausibilisierung nötig.

Vorzugsweise ist weiterhin vorgesehen, dass das Verfahren vollautonom oder teilautnom durchgeführt wird. Demnach kann der Ankoppelvorgang je nach Anwendung auch ohne oder zumindest teilweise ohne Personal durchgeführt werden, was den Aufwand verringert.

Als nicht erfindungsgemäßes Beispiel ist weiterhin eine Ankoppel-Steuereinrichtung zur Durchführung des erfindungsgemäßen Verfahrens vorgesehen, wobei die Ankoppel-Steuereinrichtung ausgebildet ist, ein Niveauregelsystem in einem Zugfahrzeug derartig anzusteuern, dass sich eine Höhe eines Fahrgestells des Zugfahrzeuges gegenüber mindestens einer Hinterachse des Zugfahrzeuges verändert. Weiterhin ist die Ankoppel-Steuereinrichtung ausgebildet, mindestens die folgenden Schritte auszuführen:
- Einlesen eines Referenz-Höhenverlaufes, wobei der Referenz-Höhenverlauf unterschiedlichen Ist-Höhenwerten für die Höhe des Fahrgestells gegenüber der mindestens einen Hinterachse einen Referenz-Höhengradienten zuordnet;
- Ansteuern des Niveauregelsystems zum Verändern der Höhe des Fahrgestells gegenüber der mindestens einen Hinterachse derartig, dass sich die Kupplungsplatte des Zugfahrzeuges an die Sattelplatte des Aufliegers annähert;
- fortlaufendes Ermitteln von Ist-Höhenwerten und von Ist-Höhengradienten während des Veränderns der Höhe des Fahrgestells gegenüber der mindestens einen Hinterachse, wobei einem Ist-Höhenwert der aktuell ermittelte Ist-Höhengradient zugeordnet ist;
- Prüfen eines Ankoppelkriteriums durch Vergleichen eines aktuell ermittelten Ist-Höhengradienten mit einem Referenz-Höhengradienten, wobei der Referenz-Höhengradient herangezogen wird, der in dem eingelesenen Referenz-Höhenverlauf demselben Ist-Höhenwert zugeordnet ist wie der aktuell ermittelte Ist-Höhengradient;
- Ansteuern des Niveauregelsystems zum Beibehalten der Höhe des Fahrgestells gegenüber der mindestens einen Hinterachse bei Erfüllen des Ankoppelkriteriums, wobei das Ankoppelkriterium erfüllt ist, wenn der aktuell ermittelte Ist-Höhengradient von dem Referenz-Höhengradienten abweicht.

Vorzugsweise ist die Ankoppel-Steuereinrichtung des nicht erfindungsgemäßen Beispiels ferner ausgebildet, die Ist-Höhenwerte von einem Höhensensor des Niveauregelsystems zu empfangen. Daher sind keine weiteren Sensoren nötig, da diese in einem Niveauregelsystem bereits vorhanden sind und beispielsweise über den Datenbus des Fahrzeuges, insbesondere dem CAN-Bus, zur Verfügung stehen.

Erfindungsgemäß ist weiterhin ein (zweiteiliges) Fahrzeug bestehend aus einem Zugfahrzeug und einem an das Zugfahrzeug ankuppelbaren Auflieger vorgesehen, wobei das Zugfahrzeug ein Fahrgestell und eine daran angeordnete Kupplungsplatte und der Auflieger eine Sattelplatte mit einem Königszapfen aufweist, wobei der Königszapfen im angekoppelten Zustand durch eine Verriegelungsvorrichtung schwenkbar an der Kupplungsplatte fixiert werden kann, wobei das Zugfahrzeug weiterhin eine erfindungsgemäße Ankoppel-Steuereinrichtung sowie ein Niveauregelsystem zum Verändern einer Höhe eines Fahrgestells des Zugfahrzeuges gegenüber mindestens einer Hinterachse des Zugfahrzeuges aufweist. Die Ankoppel-Steuereinrichtung kommuniziert als externe Steuereinrichtung mit dem Niveauregelsystem über einen Datenbus im Fahrzeug, insbesondere einem CAN-Bus, so dass auch eine einfache Nachrüstbarkeit der Ankoppel-Steuereinrichtung und/oder eine einfache Erweiterbarkeit des Niveauregelsystems gegeben ist.

Die Erfindung wird im Folgenden anhand eines Ausführungsbeispiels näher erläutert. Es zeigen:
- Fig. 1: ein zweiteiliges Fahrzeug aus einem Zugfahrzeug und einem Auflieger;
- Fig. 1a: eine Detailansicht einer Kupplungsplatte des Zugfahrzeuges gemäß Fig. 1;
- Fig. 2: ein Flussdiagramm des erfindungsgemäßen Verfahrens;
- Fig. 3, 5, 7: das zweiteilige Fahrzeug gemäß Fig. 1 während des erfindungsgemäßen Ankuppelvorgangs; und
- Fig. 4, 6: Diagramme zur Durchführung des erfindungsgemäßen Verfahrens.

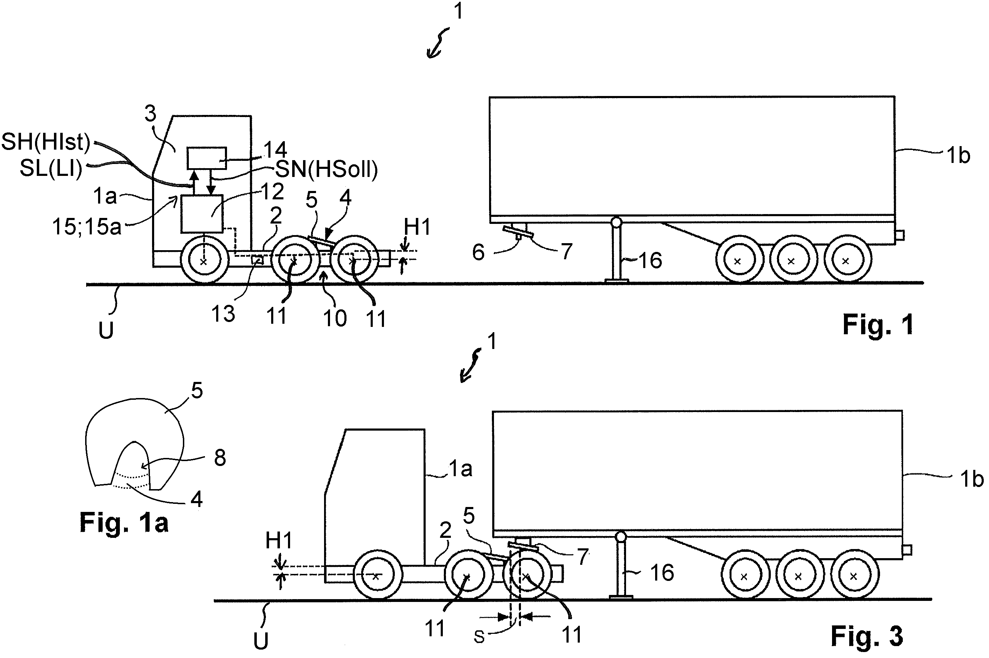

In Figur 1 ist schematisch ein zweiteiliges Fahrzeug 1, insbesondere ein Nutzfahrzeug, dargestellt, das aus einem Zugfahrzeug 1a und einem abgestellten Auflieger 1b besteht. Das Zugfahrzeug 1a weist ein Fahrgestell 2 oder Fahrzeugrahmen auf, an dem sich die Fahrerkabine 3 sowie eine Kupplungsvorrichtung mit einer Kupplungsplatte 5 (hitch plate) zum Ankoppeln des Aufliegers 1b an das Zugahrzeug 1a befinden. An dem Auflieger 1b ist ein Königszapfen 6 unterhalb einer Sattelplatte 7 befestigt, wobei der Königszapfen 6 in einem Aufnahmeschlitz 8 (s. Fig. 1a) in der Kupplungsplatte 5 des Zugfahrzeuges 1a aufgenommen und darin über eine Verriegelungsvorrichtung 4 verriegelt bzw. fixiert werden kann, um den Auflieger 1b schwenkbar an das Zugfahrzeug 1a anzukoppeln.

Das Zugfahrzeug 1a weist ferner ein Niveauregelsystem 10, z.B. ein ECAS ("Electronically Controlled Air Suspension", Elektronisch geregelte Luftfederung) auf, über das das Fahrgestell 2 gegenüber einer oder mehrerer Hinterachsen 11 des Zugfahrzeuges 1a aktiv angehoben oder abgesenkt werden kann. Da die Kupplungsvorrichtung mit der Kupplungsplatte 5 mit dem Fahrgestell 2 fest verbunden ist, wird über das Niveauregelsystem 10 gleichzeitig auch eine Höhe der Kupplungsplatte 5 gegenüber der Hinterachse(n) 11 und daher auch gegenüber einem Untergrund U eingestellt.

Das Niveauregelsystem 10 wird von einer Niveauregel-Steuereinrichtung 12 gesteuert. Diese kann bei Vorliegen eines Niveauregel-Signals SN das Fahrgestell 2 entsprechend gegenüber der oder den Hinterachsen 11 aktiv anheben oder absenken, beispielsweise durch ein aktives Belüften oder Entlüften von Federbälgen (nicht dargestellt) des Niveauregelsystems 10. Das Niveauregel-Signal SN kann beispielsweise einen Soll-Höhenwert HSoll beinhalten, über das der Niveauregel-Steuereinrichtung 12 eine gewünschte Höhe H zwischen dem Fahrgestell 2 und der oder den Hinterachsen 11 vorgegeben werden kann.

Weiterhin weist das Niveauregelsystem 10 einen Höhensensor 13 auf, der ausgebildet ist, die aktuell vorliegende Höhe H zwischen dem Fahrgestell 2 und der oder den Hinterachsen 11 zu messen. Das Niveauregelsystem 10 kann einen entsprechenden Ist-Höhenwert Hlst, der die aktuell gemessene Höhe H charakterisiert, über ein Höhen-Signal SH ausgeben. Aus diesem Ist-Höhenwert Hlst kann grundsätzlich aus einfachen geometrischen Betrachtungen auch die Höhe zwischen der Kupplungsplatte 5 und der oder den Hinterachse(n) 11 bzw. dem Untergrund U abgeleitet werden.

Im Zugfahrzeug 1a ist weiterhin eine Ankoppel-Steuereinrichtung 14 vorgesehen, über die ein Ankoppelvorgang AV gesteuert werden kann. Die Ankoppel-Steuereinrichtung 14 ist dabei ausgebildet, das Höhen-Signal SH mit dem Ist-Höhenwert Hlst einzulesen und ein Niveauregel-Signal SN mit einem entsprechenden Soll-Höhenwert HSoll an die Niveauregel-Steuereinrichtung 12 auszugeben, um ein Absenken oder Anheben des Zugfahrzeuges 1a aktiv anzufordern.

Die Ankoppel-Steuereinrichtung 14 kann dazu in der Niveauregel-Steuereinrichtung 12 integriert sein oder aber als externe Einheit, z.B. zum Nachrüsten oder Erweitern eines bestehenden Niveauregelsystems 10, vorgesehen sein. Als externe Einheit kann die Ankoppel-Steuereinrichtung 14 beispielsweise über einen Datenbus 15, beispielsweise einen CAN-Bus 15a, mit der Niveauregel-Steuereinrichtung 12 kommunizieren, um die Signale SN, SH auszutauschen.

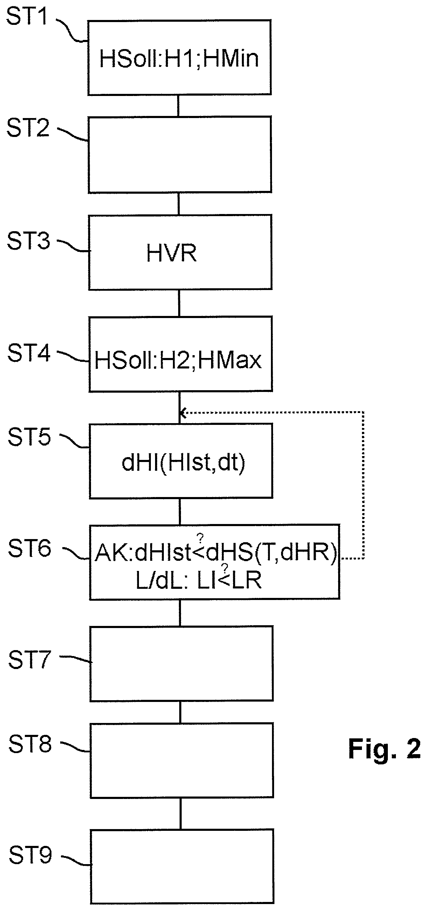

Für einen Ankoppelvorgang AV ist gemäß Fig. 2 beispielsweise vorgesehen, dass über die Ankoppel-Steuereinrichtung 14 die folgenden Schritte ausgeführt werden:
Zunächst ist sicherzustellen, dass die Höhe H zwischen dem Fahrgestell 2 und der oder den Hinterachsen 11 derartig eingestellt ist, dass das Zugfahrzeug 1a rückwärts an den Auflieger 1b heranfahren kann. Dazu gibt die Ankoppel-Steuereinrichtung 14 der Niveauregel-Steuereinrichtung 12 in einem ersten Schritt ST1 über das Niveauregel-Signal SN als Soll-Höhenwert HSoll einen ersten Höhenwert H1, beispielsweise eine Minimalhöhe HMin, vor. Dieser erste Höhenwert H1 wird derartig festgelegt, dass das Zugfahrzeug 1a nach der Einstellung des ersten Höhenwertes H1 an den Auflieger 1b herangefahren werden kann, ohne dass sich die Kupplungsplatte 5 und die Sattelplatte 7 berühren können. Vorzugsweise soll auch der Königszapfen 6 höher liegen als die Kupplungsplatte 5, um eine Berührung beim Annähern zu vermeiden. Dieser Zustand ist in Fig. 1 dargestellt.

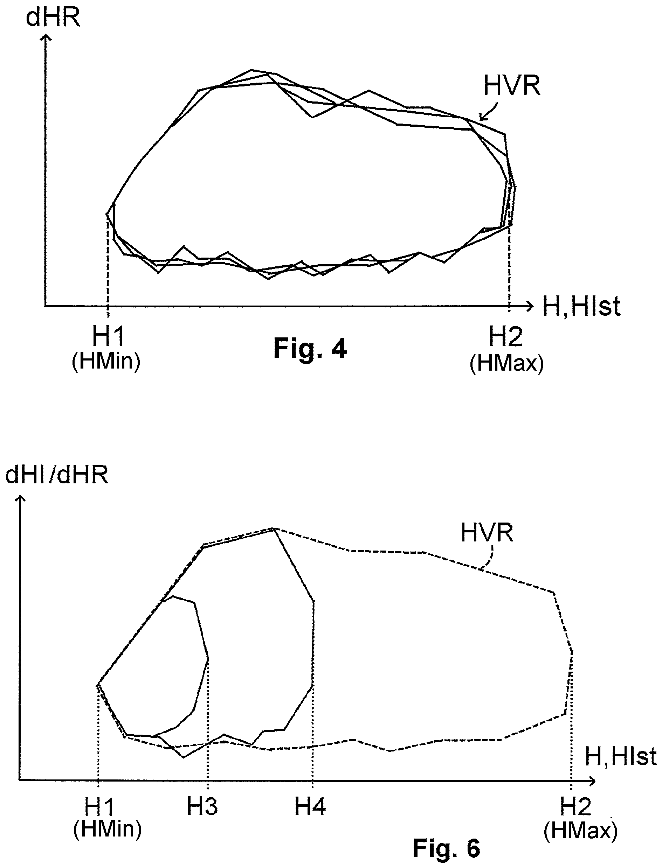

In einem nachfolgenden zweiten Schritt ST2 wird das Zugfahrzeug 1a derartig an den abgestellten Auflieger 1b herangefahren (manuell oder autonom), dass sich die Kupplungsplatte 5 und die Sattelplatte 7 zumindest teilweise überdecken. Gleichzeitig wird sichergestellt, dass der Königszapfen 6 nicht in Überdeckung mit der Kupplungsplatte 7 gelangt, in etwa durch Einhalten eines longitudinalen Sicherheitsabstandes S von ca. 0,7m, wie in Fig. 3 dargestellt. In einem dritten Schritt ST3 wird ein vorab bereitgestellter Referenz-Höhenverlauf HVR eingelesen bzw. geladen, der beispielhaft in Fig. 4 dargestellt ist. Das Einlesen des Referenz-Höhenverlaufes HVR kann grundsätzlich auch schon vor den oder parallel zu den Schritten ST1 und ST2 erfolgen.

Der Referenz-Höhenverlauf HVR ordnet dabei der Höhe H zwischen dem Fahrgestell 2 und der oder den Hinterachsen 11 einen Referenz-Höhengradienten dHR zu. Der Referenz-Höhengradient dHR gibt dabei an, wie schnell bzw. mit welcher Stellgeschwindigkeit sich die Höhe H beim Anheben oder Absenken des Fahrgestells 2 verändert, wenn das Fahrgestell 2 nicht durch eine zusätzliche Last eines Aufliegers 1b belastet wird (unladen condition). Der Referenz-Höhenverlauf HVR wird ermittelt, indem die Höhe H zwischen dem ersten Höhenwert H1, beispielsweise der Minimalhöhe HMin, und einem zweiten Höhenwert H2, beispielsweise einer Maximalhöhe HMax, verändert wird. Gleichzeitig wird aus aktuell über den Höhensensor 13 gemessenen Ist-Höhenwerten Hlst fortlaufend der Referenz-Höhengradient dHR bestimmt. Der Referenz-Höhengradient dHR kann beispielsweise aus zwei Ist-Höhenwerten Hlst berechnet werden, die mit einem zeitlichen Versatz dt von zwischen 100ms und 300ms gemessen wurden, woraus sich unmittelbar die Stellgeschwindigkeit (Höhengradient) ergibt. Der derartig ermittelte Referenz-Höhengradient dHR wird dann der aktuell vorliegenden Höhe H, die aus dem aktuell gemessenen Ist-Höhenwert Hlst folgt, zugeordnet. Durch eine derartige fortlaufende Ermittlung wird der Referenz-Höhenverlauf HVR festgelegt.

Der Referenz-Höhenverlauf HVR kann auch aus mehreren Durchläufen folgen, indem die Höhe H zwischen dem ersten Höhenwert H1 und dem zweiten Höhenwert H2 mehrfach rampenartig (in beiden Richtungen) verstellt und der korrespondierende Referenz-Höhengradient dHR aufgezeichnet wird, wie in Fig. 4 dargestellt. Aus den mehreren Durchläufen kann dann für jede Höhe H beispielsweise ein Mittelwert für den jeweils zugeordneten Referenz-Höhengradienten dHR gebildet werden, um Messungenauigkeiten zu filtern.

Der Referenz-Höhenverlauf HVR wird vorab, d.h. vor dem ersten Schritt ST1, beispielsweise unmittelbar bevor der erste Höhenwert H1 eingestellt und das Zugfahrzeug 1a an den Auflieger 1b herangefahren ist, ermittelt, um auf einen möglichst aktuellen Referenz-Höhenverlauf HVR zurückgreifen zu können. Der Referenz-Höhenverlauf HVR kann aber auch einmalig z.B. am Bandende oder in beliebigen regelmäßigen Abständen ermittelt werden. Er wird anschließend auf der Ankoppel-Steuereinrichtung 14 gespeichert, so dass für den Ankoppelvorgang AV auf die einzelnen Werte für den Referenz-Höhengradienten dHR zurückgegriffen werden kann.

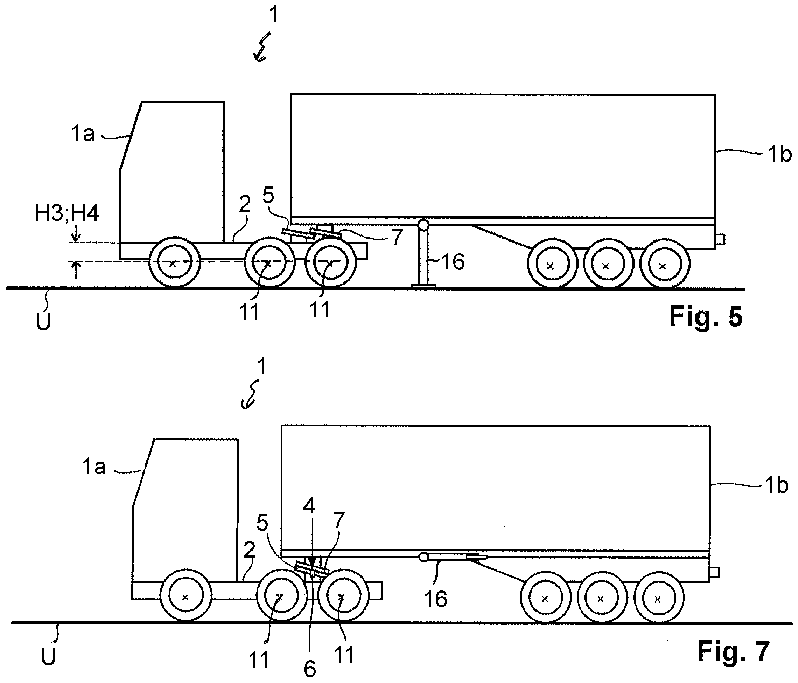

Nachfolgend wird in einem vierten Schritt ST4 durch die Vorgabe eines zweiten Höhenwertes H2, beispielsweise einer Maximalhöhe HMax, als Soll-Höhenwert HSoll an die Niveauregel-Steuereinrichtung 12 über das Niveauregel-Signal SN ein Anheben des Fahrgestells 2 angefordert. Dadurch nähert sich die Kupplungsplatte 5 an die in Überdeckung gebrachte Sattelplatte 7 an, wie in Fig. 5 dargestellt.

Durch eine Auswertung des Höhen-Signals SH bzw. der darin enthaltenen Ist-Höhenwerte Hlst wird in einem fünften Schritt ST5 fortlaufend ein aktuell vorliegender Ist-Höhengradient dHI berechnet. Dies erfolgt auch hier dadurch, dass zwei Ist-Höhenwerte Hlst mit einem zeitlichen Versatz dt von zwischen 100ms und 300ms gemessen werden und daraus die aktuelle Geschwindigkeit des Anhebens bzw. der aktuelle Ist-Höhengradient dHI für die aktuell vorliegende Höhe H berechnet wird. Darüber kann dem aktuellen Ist-Höhenwert Hlst ein aktueller Ist-Höhengradient dHI zugeordnet werden.

In einem nachfolgenden sechsten Schritt ST6 wird ein Ankoppelkriterium AK geprüft, das angibt, ob die Sattelplatte 7 die Kupplungsplatte 5 berührt. Dies erfolgt durch einen Vergleich des dem aktuellen Ist-Höhenwert HIst zugeordneten Ist-Höhengradienten dHI mit dem Referenz-Höhengradienten dHR, der demselben Ist-Höhenwert Hlst zugeordnet ist. Der Referenz-Höhengradient dHR geht dabei für den aktuellen Ist-Höhenwert HIst aus dem im dritten Schritt ST3 eingelesenen Referenz-Höhenverlauf HVR hervor.

Durch den Vergleich im sechsten Schritt ST6 kann ermittelt werden, ob sich während des Einstellens des zweiten Höhenwertes H2 dieselben Höhengradienten (vgl. dHI) ergeben wie im unbelasteten Zustand (vgl. dHR). Daraus folgt unmittelbar, ob die Sattelplatte 7 bei dem aktuellen Ist-Höhenwert Hlst auf die Kupplungsplatte 5 einwirkt. Die Höhenveränderung bzw. der ermittelte Ist-Höhengradient dHI gibt nämlich auch unmittelbar an, wie schnell die Kupplungsplatte 5 angehoben wird, da diese fest mit dem Fahrgestell 2 verbunden ist. Eine Berührung zwischen der Kupplungsplatte 5 und der Sattelplatte 7 hat daher auch unmittelbare Auswirkungen auf die Bewegung des Fahrgestells 2 und damit auf den Ist-Höhengradienten dHI:
Liegt die Sattelplatte 7 nicht an der Kupplungsplatte 5 an, so ist zu erwarten, dass der Ist-Höhengradient dHI dem Referenz-Höhengradienten dHR entspricht, da keine zusätzliche Belastung auf das Fahrgestell 2 einwirkt und dieses ungehindert nach oben gefahren wird. Weicht der einem bestimmten Ist-Höhenwert Hlst zugeordnete Ist-Höhengradient dHI allerdings von dem diesem Ist-Höhenwert Hlst ebenfalls zugeordneten Referenz-Höhengradienten dHR ab, so wirkt eine zusätzliche Belastung auf das Fahrgestell 2, vornehmlich über die Kupplungsplatte 5 durch das Gewicht des Aufliegers 1b.

Dies ist beispielhaft für zwei unterschiedliche Auflieger 1b in Fig. 6 dargestellt, wobei gestrichelt der Referenz-Höhenverlauf HVR eingezeichnet ist. Demnach weicht der Verlauf des Ist-Höhengradienten dHI ab den Ist-Höhenwerten H3 bzw. H4 von dem Referenz-Höhengradienten dHR des Referenz-Höhenverlaufes HVR ab, wobei ein dritter Ist-Höhenwert H3 und der vierte Ist-Höhenwert H4 jeweils einem anderen Auflieger 1b zugeordnet ist. Die beiden Ist-Höhenwerte H3, H4 unterscheiden sich deshalb, weil die jeweiligen Auflieger 1b in unterschiedlichen Höhen abgestellt sind, die Sattelplatte 7 also früher bzw. später gegen die Kupplungsplatte 5 gelangt und zu einem Abknicken des gemessenen Höhenverlaufes gegenüber dem Referenz-Höhenverlauf HVR führt.

Das Ankoppelkriterium AK ist daher für den jeweiligen Auflieger 1b erfüllt, wenn aus dem durchgeführten Vergleich folgt: dHI (Hlst) =/= dHR (Hlst). Dies kann auch unter Berücksichtigung eines Toleranzfaktors T erfolgen, um ungewollte Abweichungen aufgrund von Fehlern zu kompensieren. So kann das Ankoppelkriterium AK beispielsweise dann erfüllt sein, wenn der Ist-Höhengradient dHI um mehr als 20% von dem Referenz-Höhengradienten dHR abweicht. Fällt also der für einen Ist-Höhenwert Hlst ermittelte Ist-Höhengradient dHIst unter einen Gradienten-Schwellwert dHS = T x dHR = 0,8 x dHR so ist das Ankoppelkriterium AK erfüllt, da davon ausgegangen werden kann, dass der Auflieger 1b, im Speziellen die Sattelplatte 7, auf das Zugfahrzeug 1a, im Speziellen die Kupplungsplatte 5, einwirkt.

Da für das Prüfen des Ankoppelkriteriums AK das Verhalten für den unbelasteten Fall zum Vergleich herangezogen wird, kann eine Berührung zwischen der Kupplungsplatte 5 und der Sattelplatte 7 sicher ausgeschlossen werden, wenn sich beim Hochfahren des Fahrgestells 2 Veränderungen in der Stellgeschwindigkeit bzw. dem Ist-Höhengradienten dHIst ergeben, die nicht auf das Einwirken des Aufliegers 1b zurückzuführen sind, sondern auf normale Verhaltensweisen bzw. Eigenarten des Niveauregelsystems 10 selbst, die auch im unbelasteten Fall auftreten.

Ergänzend kann zum Erfüllen des Kupplungskriteriums AK geprüft werden, wie sich bei einem Unterschreiten des Gradienten-Schwellwertes dHS eine auf die Hinterachse(n) 11 wirkende Achslast L verändert hat. Diese Achslast L kann durch das Niveauregelsystem 10 selbst ermittelt und ausgegeben werden, indem beispielsweise bei einem ECAS als Niveauregelsystem 10 die vorherrschenden pneumatischen Drücke in den Luftbälgen ausgewertet werden. Dazu wird irgendwann vor dem Annähern des Zugfahrzeuges 1a an den Auflieger 1b im Schritt ST4 aus einem vom Niveauregelsystem 10 ausgegebenen Achslast-Signal SL der zu diesem Zeitpunkt vorliegende Ist-Achslastwert LI als Referenz-Achslast LR gespeichert. Nachdem ein Unterschreiten des Gradienten-Schwellwertes dHS im sechsten Schritt ST6 festgestellt wurde, wird der dann vorliegende Ist-Achslastwert LI mit der Referenz-Achslast LR verglichen.

Aus einer Achslast-Differenz dL=LI-LR kann darauf geschlossen werden, wie stark sich die Belastung bzw. das Gewicht (Achslast L) auf die Hinterachse(n) 11 verändert hat. Weist die Achslast-Differenz dL darauf hin, dass sich die Achslast L beim Ankuppelvorgang AV um mehr als 1t verändert hat, so ist das Unterschreiten des Gradienten-Schwellwertes dHS infolge eines Anliegens der Sattelplatte 7 an der Kupplungsplatte 5 plausibel. Das Kupplungskriterium AK kann daher mit hoher Sicherheit als erfüllt angesehen werden.

Ist das Ankoppelkriterum AK erfüllt, kann in einem siebenten Schritt ST7 über das Niveauregel-Signal SN ausgegeben werden, dass der aktuelle Ist-Höhenwert Hlst als Soll-Höhenwert HSoll verwendet wird, woraufhin das Anheben des Fahrgestells 2 über das Niveauregelsystem 10 gestoppt wird. Ist das Ankoppelkriterium AK nicht erfüllt, wird mit den Schritten ST5 und ST6 fortgefahren, d.h. das Fahrgestell 2 wird weiter angehoben.

Ist das Ankoppelkriterium AK erfüllt und ein weiteres Anheben des Fahrgestells 2 gestoppt, so kann das Zugfahrzeug 1a in einem nachfolgenden achten Schritt ST8 weiter an den Auflieger 1b herangefahren werden (s. Fig. 7), wobei dazu über das Niveauregel-Signal SN ergänzend ein Absenken des Zugfahrzeuges 1a angefordert werden kann, um das Aufnehmen des Königszapfens 6 in dem Aufnahmeschlitz 8 zu erleichtern. In einem abschließenden neunten Schritt ST9 kann dann die Verriegelungsvorrichtung 4 betätigt werden, um den Königszapfen 6 in dem Aufnahmeschlitz 8 zu fixieren. Weiterhin kann eine Stütze 16 des Aufliegers 1b, auf der dieser ursprünglich abgestellt war, hochgeschwenkt werden. Der Ankoppelvorgang AK ist damit abgeschlossen.

### Bezugszeichenliste (Bestandteil der Beschreibung)

- 1: Fahrzeug
- 1a: Zugfahrzeug
- 1b: Auflieger
- 2: Fahrgestell
- 3: Fahrerkabine
- 4: Verriegelungsvorrichtung
- 5: Kupplungsplatte
- 6: Königszapfen
- 7: Sattelplatte
- 8: Aufnahmeschlitz
- 10: Niveauregelsystem
- 11: Hinterachse des Zugfahrzeuges 1a
- 12: Niveauregel-Steuereinrichtung
- 13: Höhensensor
- 14: Ankoppel-Steuereinrichtung
- 15: Datenbus
- 15a: CAN-Bus
- 16: Stütze am Auflieger 1b
- AK: Ankoppelkriterium
- AV: Ankoppelvorgang
- dHI: Ist-Höhengradient
- dHR: Referenz-Höhengradient
- dHS: Gradienten-Schwellwert
- dL: Achslast-Differenz
- dt: zeitlicher Versatz
- H: Höhe zwischen dem Fahrgestell 2 und der Hinterachse 11
- H1: erster Höhenwert
- H2: zweiter Höhenwert
- H3: dritter Höhenwert
- H4: vierter Höhenwert
- HIst: Ist-Höhenwert
- HMax: Maximalhöhe
- HMin: Minimalhöhe
- HSoll: Soll-Höhenwert
- HVR: Referenz-Höhenverlauf
- L: Achslast
- LI: Ist-Achslastwert
- LR: Referenz-Achslast
- SH: Höhen-Signal
- SL: Achslast-Signal
- SN: Niveauregel-Signal
- T: Toleranzfaktor
- U: Untergrund
- ST1 - ST9: Schritte des Verfahrens

## Patentansprüche

1. Verfahren zum Ankoppeln eines Aufliegers (1b) an ein Zugfahrzeug (1a),
wobei das Zugfahrzeug (1a) ein Fahrgestell (2) und eine daran angeordnete Kupplungsplatte (5) und der Auflieger (1b) eine Sattelplatte (7) mit einem Königszapfen (6) aufweist, wobei der Königszapfen (6) im angekoppelten Zustand durch eine Verriegelungsvorrichtung (4) schwenkbar an der Kupplungsplatte (7) fixiert werden kann,
wobei das Zugfahrzeug (1a) ferner ein Niveauregelsystem (10) aufweist,
wobei sich eine Höhe (H) des Fahrgestells (2) gegenüber mindestens einer Hinterachse (11) des Zugfahrzeuges (1a) durch eine Ansteuerung des Niveauregelsystems (10) verändern lässt,
mit mindestens den folgenden Schritten:
- Einlesen eines Referenz-Höhenverlaufes (HVR), wobei der Referenz-Höhenverlauf (HVR) unterschiedlichen Ist-Höhenwerten (Hlst) für die Höhe (H) des Fahrgestells (2) gegenüber der mindestens einen Hinterachse (11) einen Referenz-Höhengradienten (dHR) zuordnet (ST3);
- Verändern der Höhe (H) des Fahrgestells (2) gegenüber der mindestens einen Hinterachse (11) derartig, dass sich die Kupplungsplatte (5) des Zugfahrzeuges (1a) an die Sattelplatte (7) des Aufliegers (1b) annähert (ST4);
- fortlaufendes Ermitteln von Ist-Höhenwerten (Hlst) und von Ist-Höhengradienten (dHI) während des Veränderns der Höhe (H) des Fahrgestells (2) gegenüber der mindestens einen Hinterachse (11), wobei einem Ist-Höhenwert (Hlst) der aktuell ermittelte Ist-Höhengradient (dHI) zugeordnet wird (ST5);
- Prüfen eines Ankoppelkriteriums (AK) durch Vergleichen eines aktuell ermittelten Ist-Höhengradienten (dHI) mit einem Referenz-Höhengradienten (dHR), wobei der Referenz-Höhengradient (dHR) herangezogen wird, der in dem eingelesenen Referenz-Höhenverlauf (HVR) demselben Ist-Höhenwert (Hlst) zugeordnet ist wie der aktuell ermittelte Ist-Höhengradient (dHI) (ST6);
- Beibehalten der Höhe (H) des Fahrgestells (2) gegenüber der mindestens einen Hinterachse (11) bei Erfüllen des Ankoppelkriteriums (AK) (ST7), wobei das Ankoppelkriterium (AK) erfüllt ist, wenn der aktuell ermittelte Ist-Höhengradient (dHI) von dem Referenz-Höhengradienten (dHR) abweicht.

2. Verfahren nach Anspruch 1, **dadurch gekennzeichnet, dass** der Referenz-Höhenverlauf (HVR) vorab ermittelt wird, ohne dass die Kupplungsplatte (5) des Zugfahrzeuges (1a) belastet wird, wobei dazu die Höhe (H) des Fahrgestells (2) gegenüber der mindestens einen Hinterachse (11) zwischen einem ersten Höhenwert (H1), beispielsweise einer Minimalhöhe (HMin), und einem zweiten Höhenwert (H2), beispielsweise einer Maximalhöhe (HMax), einmalig oder mehrmalig verändert wird und während des Veränderns der Höhe (H) des Fahrgestells (2) gegenüber der mindestens einen Hinterachse (11) fortlaufend Ist-Höhenwerte (Hlst) und Ist-Höhengradienten (dHI) ermittelt werden,
wobei einem Ist-Höhenwert (Hlst) der aktuell ermittelte Ist-Höhengradient (dHI) als Referenz-Höhengradient (dHR) zugeordnet und in dem Referenz-Höhenverlauf (HVR) abgespeichert wird.

3. Verfahren nach einem der vorherigen Ansprüche, **dadurch gekennzeichnet, dass** der Ist-Höhengradient (dHI) und/oder der Referenz-Höhengradient (dHR) durch ein zeitlich versetztes Bestimmen von Ist-Höhenwerten (Hlst) erfolgt, wobei der zeitliche Versatz (dt) zwischen 100ms und 300ms beträgt.

4. Verfahren nach einem der vorhergehenden Ansprüche, **dadurch gekennzeichnet, dass** das Einstellen der Höhe (H) über das Niveauregelsystem (10) durch Festlegen eines Soll-Höhenwertes (HSoll) erfolgt.

5. Verfahren nach einem der vorhergehenden Ansprüche, **dadurch gekennzeichnet, dass** das Verändern der Höhe (H) des Fahrgestells (2) gegenüber der mindestens einen Hinterachse (11) zum Annähern der Kupplungsplatte (5) des Zugfahrzeuges (1a) an die Sattelplatte (7) des Aufliegers (1b) (ST4) erfolgt, nachdem die Sattelplatte (7) des Aufliegers (1b) zumindest anteilig mit der Kupplungsplatte (5) des Zugfahrzeuges (1a) in Überdeckung gebracht wurde, vorzugsweise durch ein manuelles oder automatisiertes Annähern des Zugfahrzeuges (1a) an den Auflieger (1b) (ST2).

6. Verfahren nach Anspruch 5, **dadurch gekennzeichnet, dass** die Höhe (H) des Fahrgestells (2) gegenüber der mindestens einen Hinterachse (11) des Zugfahrzeuges (1a) vor dem in Überdeckung Bringen der Kupplungsplatte (5) und der der Sattelplatte (7) derartig eingestellt wird, dass sich die Kupplungsplatte (5) und die Sattelplatte (7) beim in Überdeckung Bringen nicht berühren (H1).

7. Verfahren nach Anspruch 5 oder 6, **dadurch gekennzeichnet, dass** das in Überdeckung Bringen der Kupplungsplatte (5) und der der Sattelplatte (7) derartig erfolgt, dass der Königszapfen (6) die Kupplungsplatte (5) nicht überdeckt, wobei zwischen der Kupplungsplatte (5) und dem Königszapfen (6) ein Sicherheitsabstand (S) eingehalten wird.

8. Verfahren nach einem der vorhergehenden Ansprüche, **dadurch gekennzeichnet, dass** die Kupplungsplatte (5) die Sattelplatte (7) berührt, wenn der aktuell ermittelte Ist-Höhengradient (dHI) von dem Referenz-Höhengradienten (dHR) abweicht.

9. Verfahren nach einem der vorhergehenden Ansprüche, **dadurch gekennzeichnet, dass** das Ankoppelkriterium (AK) erfüllt ist, wenn der aktuell ermittelte Ist-Höhengradient (dHI) einen Gradienten-Schwellwert (dHS) unterschreitet.

10. Verfahren nach Anspruch 9, **dadurch gekennzeichnet, dass** der Gradienten-Schwellwert (dHS) in Abhängigkeit eines Toleranzfaktors (T) aus dem Referenz-Höhengradienten (dHR) ermittelt wird, vorzugsweise aus dHS = T x dHR.

11. Verfahren nach Anspruch 10, **dadurch gekennzeichnet, dass** der Toleranzfaktor (T) zwischen 0,7 und 0,85 liegt, vorzugsweise bei 0,8.

12. Verfahren nach einem der vorhergehenden Ansprüche, **dadurch gekennzeichnet, dass** für das Erfüllen des Ankoppelkriteriums (AK) ergänzend geprüft wird, ob ein Ist-Achslastwert (LI), der eine Achslast (L) auf die mindestens eine Hinterachse (11) bei Vorliegen einer Abweichung zwischen dem aktuell ermittelten Ist-Höhengradienten (dHI) und dem Referenz-Höhengradienten (dHR) angibt, von einer Referenz-Achslast (LR), die vor dem Verändern der Höhe (H) des Fahrgestells (2) gegenüber der mindestens einen Hinterachse (11) ermittelt wird, nach oben hin abweicht.

13. Verfahren nach Anspruch 12, **dadurch gekennzeichnet, dass** das Ankoppelkriterium (AK) erfüllt ist, wenn eine Achslast-Differenz (dL) zwischen der Referenz-Achslast (LR) und dem Ist-Achslastwert (LI) bei Vorliegen einer Abweichung zwischen dem aktuell ermittelten Ist-Höhengradienten (dHI) und dem Referenz-Höhengradienten (dHR) darauf hinweist, dass sich die Achslast (L) auf die mindestens eine Hinterachse (11) um mehr als 1t verändert hat.

14. Verfahren nach Anspruch 12 oder 13, **dadurch gekennzeichnet, dass** der Ist-Achslastwert (LI) und/oder die Referenz-Achslast (LR) über das Niveauregelsystem (10) ermittelt wird.

15. Verfahren nach einem der vorhergehenden Ansprüche, **dadurch gekennzeichnet, dass** das Verfahren vollautonom oder teilautnom durchgeführt wird.

16. Fahrzeug (1) bestehend aus einem Zugfahrzeug (1a) und einem an das Zugfahrzeug (1a) ankuppelbaren Auflieger (1b), wobei das Zugfahrzeug (1a) ein Fahrgestell (2) und eine daran angeordnete Kupplungsplatte (5) und der Auflieger (1b) eine Sattelplatte (7) mit einem Königszapfen (6) aufweist, wobei der Königszapfen (6) im angekoppelten Zustand durch eine Verriegelungsvorrichtung (4) schwenkbar an der Kupplungsplatte (7) fixiert werden kann, wobei das Zugfahrzeug (1a) weiterhin eine Ankoppel-Steuereinrichtung (14) zur Durchführung eines Verfahrens nach einem der vorhergehenden Ansprüche sowie ein Niveauregelsystem (10) zum Verändern einer Höhe (H) eines Fahrgestells (2) des Zugfahrzeuges (1a) gegenüber mindestens einer Hinterachse (11) des Zugfahrzeuges (1a) aufweist, wobei die Ankoppel-Steuereinrichtung (14) mit der Niveauregel-Steuereinrichtung (12) des Niveauregelsystems (10) über einen Datenbus (15) signalleitend verbunden ist und wobei die Ankoppel-Steuereinrichtung (14) ausgebildet ist, ein Niveauregelsystem (10) in einem Zugfahrzeug (1a) derartig anzusteuern, dass sich eine Höhe (H) eines Fahrgestells (2) des Zugfahrzeuges (1a) gegenüber mindestens einer Hinterachse (11) des Zugfahrzeuges (1a) verändert, und mindestens die folgenden Schritte auszuführen:
- Einlesen eines Referenz-Höhenverlaufes (HVR), wobei der Referenz-Höhenverlauf (HVR) unterschiedlichen Ist-Höhenwerten (HIst) für die Höhe (H) des Fahrgestells (2) gegenüber der mindestens einen Hinterachse (11) einen Referenz-Höhengradienten (dHR) zuordnet;
- Ansteuern des Niveauregelsystems (10) zum Verändern der Höhe (H) des Fahrgestells (2) gegenüber der mindestens einen Hinterachse (11) derartig, dass sich die Kupplungsplatte (5) des Zugfahrzeuges (1a) an die Sattelplatte (7) des Aufliegers (1b) annähert;
- fortlaufendes Ermitteln von Ist-Höhenwerten (HIst) und von Ist-Höhengradienten (dHI) während des Veränderns der Höhe (H) des Fahrgestells (2) gegenüber der mindestens einen Hinterachse (11), wobei einem Ist-Höhenwert (HIst) der aktuell ermittelte Ist-Höhengradient (dHI) zugeordnet ist;
- Prüfen eines Ankoppelkriteriums (AK) durch Vergleichen eines aktuell ermittelten Ist-Höhengradienten (dHI) mit einem Referenz-Höhengradienten (dHR), wobei der Referenz-Höhengradient (dHR) herangezogen wird, der in dem eingelesenen Referenz-Höhenverlauf (HVR) demselben Ist-Höhenwert (HIst) zugeordnet ist wie der aktuell ermittelte Ist-Höhengradient (dHI);
- Ansteuern des Niveauregelsystems (10) zum Beibehalten der Höhe (H) des Fahrgestells (2) gegenüber der mindestens einen Hinterachse (11) bei Erfüllen des Ankoppelkriteriums (AK), wobei das Ankoppelkriterium (AK) erfüllt ist, wenn der aktuell ermittelte Ist-Höhengradient (dHI) von dem Referenz-Höhengradienten (dHR) abweicht.

17. Fahrzeug (1) nach Anspruch 16, **dadurch gekennzeichnet, dass** die Ankoppel-Steuereinrichtung (14) ausgebildet ist, die Ist-Höhenwerte (HIst) von einem Höhensensor (13) des Niveauregelsystems (10) zu empfangen.

18. Fahrzeug (1) nach Anspruch 16 oder 17, **dadurch gekennzeichnet, dass** der Datenbus (15) ein CAN-Datenbus (15a) ist.

## Claims

1. Method for coupling a semi-trailer (1b) to a towing vehicle (1a), wherein the towing vehicle (1a) has a chassis (2) and a coupling plate (5) arranged thereon and the semi-trailer (1b) has a top plate (7) with a kingpin (6), wherein the kingpin (6) can be pivotally fixed to the coupling plate (7) by a locking mechanism (4) in the coupled state,
wherein the towing vehicle (1a) further comprises a ride-height control system (10), wherein a height (H) of the chassis (2) relative to at least one rear axle (11) of the towing vehicle (1a) can be changed by controlling the ride-height control system (10),
comprising at least the following steps:
- reading in a reference height profile (HVR), wherein the reference height profile (HVR) assigns (ST3) a reference height gradient (dHR) to different actual height values (HIst) for the height (H) of the chassis (2) relative to the at least one rear axle (11);
- changing the height (H) of the chassis (2) relative to the at least one rear axle (11) in such a way that the coupling plate (5) of the towing vehicle (1a) approaches (ST4) the top plate (7) of the semi-trailer (1b);
- continuously determining actual height values (HIst) and actual height gradients (dHI) while changing the height (H) of the chassis (2) relative to the at least one rear axle (11), wherein the currently determined actual height gradient (dHI) is assigned (ST5) to an actual height value (HIst);
- checking a coupling criterion (AK) by comparing a currently determined actual height gradient (dHI) with a reference height gradient (dHR), wherein the reference height gradient (dHR) is used, which is assigned to the same actual height value (Hlst) in the read-in reference height profile (HVR) as the currently determined actual height gradient (dHI) (ST6);
- maintaining the height (H) of the chassis (2) relative to the at least one rear axle (11) when the coupling criterion (AK) is met (ST7), wherein the coupling criterion (AK) is met when the currently determined actual height gradient (dHI) deviates from the reference height gradient (dHR).

2. Method according to claim 1, **characterized in that** the reference height profile (HVR) is determined in advance without the coupling plate (5) of the towing vehicle (1a) being loaded, to this end the height (H) of the chassis (2) relative to the at least one rear axle (11) being changed once or multiple times between a first height value (H1), for example a minimum height (HMin), and a second height value (H2), for example a maximum height (HMax), and during the changing of the height (H) of the chassis (2) relative to the at least one rear axle (11), actual height values (HIst) and actual height gradients (dHI) being continuously determined,
the currently determined actual height gradient (dHI) being assigned to an actual height value (Hlst) as a reference height gradient (dHR) and stored in the reference height profile (HVR).

3. Method according to either of the preceding claims, **characterized in that** the actual height gradient (dHI) and/or the reference height gradient (dHR) is determined by a temporally offset determination of actual height values (HIst), the temporal offset (dt) being between 100 ms and 300 ms.

4. Method according to any of the preceding claims, **characterized in that** the height (H) is adjusted via the ride-height control system (10) by setting a target height value (HSoll).

5. Method according to any of the preceding claims, **characterized in that** the changing of the height (H) of the chassis (2) relative to the at least one rear axle (11) in order to bring the coupling plate (5) of the towing vehicle (1a) closer to the top plate (7) of the semi-trailer (1b) (ST4) takes place after the top plate (7) of the semi-trailer (1b) has been at least partially brought into overlap with the coupling plate (5) of the towing vehicle (1a), preferably by a manual or automated approach of the towing vehicle (1a) to the semi-trailer (1b) (ST2).

6. Method according to claim 5, **characterized in that** the height (H) of the chassis (2) relative to the at least one rear axle (11) of the towing vehicle (1a) is adjusted before the coupling plate (5) and the top plate (7) are brought into overlap in such a way that the coupling plate (5) and the top plate (7) do not touch when they are brought into overlap (H1).

7. Method according to claim 5 or 6, **characterized in that** the coupling plate (5) and the top plate (7) are brought into overlap in such a way that the kingpin (6) does not overlap the coupling plate (5), a safety distance (S) being maintained between the coupling plate (5) and the kingpin (6).

8. Method according to any of the preceding claims, **characterized in that** the coupling plate (5) touches the top plate (7) if the currently determined actual height gradient (dHI) deviates from the reference height gradient (dHR).

9. Method according to any of the preceding claims, **characterized in that** the coupling criterion (AK) is met if the currently determined actual height gradient (dHI) falls below a gradient threshold value (dHS).

10. Method according to claim 9, **characterized in that** the gradient threshold value (dHS) is determined as a function of a tolerance factor (T) from the reference height gradient (dHR), preferably from dHS = T x dHR.

11. Method according to claim 10, **characterized in that** the tolerance factor (T) is between 0.7 and 0.85, preferably 0.8.

12. Method according to any of the preceding claims, **characterized in that** in order to meet the coupling criterion (AK), it is additionally checked whether an actual axle load value (LI), which indicates an axle load (L) on the at least one rear axle (11) in the event of a deviation between the currently determined actual height gradient (dHI) and the reference height gradient (dHR), deviates upward from a reference axle load (LR), which is determined before the height (H) of the chassis (2) relative to the at least one rear axle (11) is changed.

13. Method according to claim 12, **characterized in that** the coupling criterion (AK) is met if an axle load difference (dL) between the reference axle load (LR) and the actual axle load value (LI) in the event of a deviation between the currently determined actual height gradient (dHI) and the reference height gradient (dHR) indicates that the axle load (L) on the at least one rear axle (11) has changed by more than 1 t.

14. Method according to claim 12 or 13, **characterized in that** the actual axle load value (LI) and/or the reference axle load (LR) is determined via the ride-height control system (10).

15. Method according to any of the preceding claims, **characterized in that** the method is carried out fully autonomously or partially autonomously.

16. Vehicle (1) comprising a towing vehicle (1a) and a semi-trailer (1b) which can be coupled to the towing vehicle (1a), wherein the towing vehicle (1a) has a chassis (2) and a coupling plate (5) arranged thereon, and the semi-trailer (1b) has a top plate (7) with a kingpin (6), wherein the kingpin (6) can be pivotally fixed to the coupling plate (7) by a locking mechanism (4) in the coupled state, wherein the towing vehicle (1a) further comprises a coupling control device (14) for carrying out a method according to any of the preceding claims, as well as a ride-height control system (10) for changing a height (H) of a chassis (2) of the towing vehicle (1a) relative to at least one rear axle (11) of the towing vehicle (1a), wherein the coupling control device (14) is connected in a signal-conducting manner to the ride-height control device (12) of the ride-height control system (10) via a data bus (15) and wherein the coupling control device (14) is designed to control a ride-height control system (10) in a towing vehicle (1a) in such a way that a height (H) of a chassis (2) of the towing vehicle (1a) changes relative to at least one rear axle (11) of the towing vehicle (1a), and to carry out at least the following steps:
- reading in a reference height profile (HVR), wherein the reference height profile (HVR) assigns a reference height gradient (dHR) to different actual height values (Hlst) for the height (H) of the chassis (2) relative to the at least one rear axle (11);
- controlling the ride-height control system (10) to change the height (H) of the chassis (2) relative to the at least one rear axle (11) in such a way that the coupling plate (5) of the towing vehicle (1a) approaches the top plate (7) of the semi-trailer (1b);
- continuously determining actual height values (HIst) and actual height gradients (dHI) while changing the height (H) of the chassis (2) relative to the at least one rear axle (11), wherein the currently determined actual height gradient (dHI) is assigned to an actual height value (HIst);
- checking a coupling criterion (AK) by comparing a currently determined actual height gradient (dHI) with a reference height gradient (dHR), wherein the reference height gradient (dHR) is used, which is assigned to the same actual height value (Hlst) in the read-in reference height profile (HVR) as the currently determined actual height gradient (dHI);
- controlling the ride-height control system (10) to maintain the height (H) of the chassis (2) relative to the at least one rear axle (11) when the coupling criterion (AK) is met, wherein the coupling criterion (AK) is met when the currently determined actual height gradient (dHI) deviates from the reference height gradient (dHR).

17. Vehicle (1) according to claim 16, **characterized in that** the coupling control device (14) is designed to receive the actual height values (Hlst) from a height sensor (13) of the ride-height control system (10).

18. Vehicle (1) according to either claim 16 or claim 17,
**characterized in that** the data bus (15) is a CAN data bus (15a).

## Revendications

1. Procédé pour l'attelage d'une semi-remorque (1b) à un véhicule tracteur (1a), dans lequel le véhicule tracteur (1a) présente un châssis (2) et une plaque d'attelage (5) disposée sur celui-ci et la semi-remorque (1b) présente une plaque formant sellette (7) comportant un pivot central (6), dans lequel, à l'état attelé, le pivot central (6) peut être fixé de manière à pouvoir pivoter à la plaque d'attelage (7) par un dispositif de verrouillage (4),
dans lequel le véhicule tracteur (1a) présente en outre un système de régulation de niveau (10), dans lequel une hauteur (H) du châssis (2) par rapport à au moins un essieu arrière (11) du véhicule tracteur (1a) peut être modifiée par une commande du système de régulation de niveau (10),
comportant au moins les étapes suivantes :
- lecture d'une courbe de hauteur de référence (HVR), dans lequel la courbe de hauteur de référence (HVR) associe un gradient de hauteur de référence (dHR) à différentes valeurs de hauteur réelle (HIst) pour la hauteur (H) du châssis (2) par rapport à l'au moins un essieu arrière (11) (ST3) ;
- modification de la hauteur (H) du châssis (2) par rapport à l'au moins un essieu arrière (11) de telle sorte que la plaque d'attelage (5) du véhicule tracteur (1a) se rapproche de la plaque formant sellette (7) de la semi-remorque (1b) (ST4) ;
- détermination en continu de valeurs de hauteur réelle (HIst) et de gradients de hauteur réelle (dHI) pendant la modification de la hauteur (H) du châssis (2) par rapport à l'au moins un essieu arrière (11), dans lequel le gradient de hauteur réelle (dHI) actuellement déterminé est associé à une valeur de hauteur réelle (HIst) (ST5) ;
- vérification d'un critère d'attelage (AK) en comparant un gradient de hauteur réelle (dHI) actuellement déterminé avec un gradient de hauteur de référence (dHR), dans lequel le gradient de hauteur de référence (dHR) est utilisé, lequel, dans la courbe de hauteur de référence (HVR) lue, est associé à la même valeur de hauteur réelle (HIst) que le gradient de hauteur réelle (dHI) actuellement déterminé (ST6) ;
- maintien de la hauteur (H) du châssis (2) par rapport à l'au moins un essieu arrière (11) lorsque le critère d'attelage (AK) est satisfait (ST7), dans lequel le critère d'attelage (AK) est satisfait lorsque le gradient de hauteur réelle (dHI) actuellement déterminé s'écarte du gradient de hauteur de référence (dHR).

2. Procédé selon la revendication 1, **caractérisé en ce que** la courbe de hauteur de référence (HVR) est déterminée au préalable sans que la plaque d'attelage (5) du véhicule tracteur (1a) ne soit chargée, dans lequel la hauteur (H) du châssis (2) par rapport à l'au moins un essieu arrière (11) est modifiée une fois ou plusieurs fois entre une première valeur de hauteur (H1), par exemple une hauteur minimale (HMin), et une seconde valeur de hauteur (H2), par exemple une hauteur maximale (HMax), et, pendant la modification de la hauteur (H) du châssis (2) par rapport à l'au moins un essieu arrière (11), des valeurs de hauteur réelle (Hlst) et des gradients de hauteur réelle (dHI) sont déterminés en continu,
dans lequel le gradient de hauteur réelle (dHI) actuellement déterminé est associé à une valeur de hauteur réelle (HIst) en tant que gradient de hauteur de référence (dHR) et est mémorisé dans la courbe de hauteur de référence (HVR).

3. Procédé selon l'une des revendications précédentes,
**caractérisé en ce que** le gradient de hauteur réelle (dHI) et/ou le gradient de hauteur de référence (dHR) sont effectués par une définition décalée dans le temps de valeurs de hauteur réelle (Hlst), dans lequel le décalage dans le temps (dt) est compris entre 100 ms et 300 ms.

4. Procédé selon l'une des revendications précédentes,
**caractérisé en ce que** le réglage de la hauteur (H) est effectué par l'intermédiaire du système de régulation de niveau (10) en fixant une valeur de hauteur de consigne (HSoll).

5. Procédé selon l'une des revendications précédentes,
**caractérisé en ce que** la modification de la hauteur (H) du châssis (2) par rapport à l'au moins un essieu arrière (11) est effectuée pour rapprocher la plaque d'attelage (5) du véhicule tracteur (1a) de la plaque formant sellette (7) de la semi-remorque (1b) (ST4), après que la plaque formant sellette (7) de la semi-remorque (1b) a été amenée de manière à recouvrir au moins partiellement la plaque d'attelage (5) du véhicule tracteur (1a), de préférence par un rapprochement manuel ou automatisé du véhicule tracteur (1a) de la semi-remorque (1b) (ST2).

6. Procédé selon la revendication 5, **caractérisé en ce que** la hauteur (H) du châssis (2) par rapport à l'au moins un essieu arrière (11) du véhicule tracteur (1a) est réglée, avant le recouvrement de la plaque d'attelage (5) par la plaque formant sellette (7), de telle sorte que la plaque d'attelage (5) et la plaque formant sellette (7) ne se touchent pas lors du recouvrement (H1).

7. Procédé selon la revendication 5 ou 6, **caractérisé en ce que** le recouvrement de la plaque d'attelage (5) par la plaque formant sellette (7) est effectué de telle sorte que le pivot central (6) ne recouvre pas la plaque d'attelage (5), dans lequel une distance de sécurité (S) est maintenue entre la plaque d'attelage (5) et le pivot central (6).

8. Procédé selon l'une des revendications précédentes,
**caractérisé en ce que** la plaque d'attelage (5) touche la plaque formant sellette (7) lorsque le gradient de hauteur réelle (dHI) actuellement déterminé s'écarte du gradient de hauteur de référence (dHR).

9. Procédé selon l'une des revendications précédentes,
**caractérisé en ce que** le critère d'attelage (AK) est satisfait lorsque le gradient de hauteur réelle (dHI) actuellement déterminé est inférieur à une valeur seuil de gradient (dHS).

10. Procédé selon la revendication 9, **caractérisé en ce que** la valeur seuil de gradient (dHS) est déterminée en fonction d'un facteur de tolérance (T) à partir du gradient de hauteur de référence (dHR), de préférence à partir de dHS = T x dHR.

11. Procédé selon la revendication 10, **caractérisé en ce que** le facteur de tolérance (T) est compris entre 0,7 et 0,85, de préférence est de 0,8.

12. Procédé selon l'une des revendications précédentes,
**caractérisé en ce que,** pour satisfaire au critère d'attelage (AK), on vérifie en complément si une valeur de charge d'essieu réelle (LI) indiquant une charge d'essieu (L) sur l'au moins un essieu arrière (11), en présence d'un écart entre le gradient de hauteur réelle (dHI) actuellement déterminé et le gradient de hauteur de référence (dHR), s'écarte vers le haut d'une charge d'essieu de référence (LR) déterminée avant la modification de la hauteur (H) du châssis (2) par rapport à l'au moins un essieu arrière (11).

13. Procédé selon la revendication 12, **caractérisé en ce que** le critère d'attelage (AK) est satisfait lorsqu'une différence de charge d'essieu (dL) entre la charge d'essieu de référence (LR) et la valeur de charge d'essieu réelle (LI) indique, en présence d'un écart entre le gradient de hauteur réelle (dHI) actuellement déterminé et le gradient de hauteur de référence (dHR), que la charge d'essieu (L) sur l'au moins un essieu arrière (11) a changé de plus de 1 t.

14. Procédé selon la revendication 12 ou 13, **caractérisé en ce que** la valeur de charge d'essieu réelle (LI) et/ou la charge d'essieu de référence (LR) sont déterminées par l'intermédiaire du système de régulation de niveau (10).

15. Procédé selon l'une des revendications précédentes,
**caractérisé en ce que** le procédé est réalisé de manière entièrement autonome ou semi-autonome.

16. Véhicule (1) composé d'un véhicule tracteur (1a) et d'une semi-remorque (1b) pouvant être attelée au véhicule tracteur (1a), dans lequel le véhicule tracteur (1a) présente un châssis (2) et une plaque d'attelage (5) disposée sur celui-ci et la semi-remorque (1b) présente une plaque formant sellette (7) comportant un pivot central (6), dans lequel, à l'état attelé, le pivot central (6) peut être fixé de manière à pouvoir pivoter à la plaque d'attelage (7) par un dispositif de verrouillage (4), dans lequel le véhicule tracteur (1a) présente en outre un appareil de commande d'attelage (14) pour la réalisation d'un procédé selon l'une des revendications précédentes ainsi qu'un système de régulation de niveau (10) pour la modification d'une hauteur (H) d'un châssis (2) du véhicule tracteur (1a) par rapport à au moins un essieu arrière (11) du véhicule tracteur (1a), dans lequel l'appareil de commande d'attelage (14) est connecté par conduction de signaux à l'appareil de commande de régulation de niveau (12) du système de régulation de niveau (10) par l'intermédiaire d'un bus de données (15) et dans lequel l'appareil de commande d'attelage (14) est configuré pour commander un système de régulation de niveau (10) dans un véhicule tracteur (1a) de telle sorte qu'une hauteur (H) d'un châssis (2) du véhicule tracteur (1a) par rapport à au moins un essieu arrière (11) du véhicule tracteur (1a) est modifiée, et pour exécuter au moins les étapes suivantes :
- lecture d'une courbe de hauteur de référence (HVR), dans lequel la courbe de hauteur de référence (HVR) associe un gradient de hauteur de référence (dHR) à différentes valeurs de hauteur réelle (HIst) pour la hauteur (H) du châssis (2) par rapport à l'au moins un essieu arrière (11) ;
- commande du système de régulation de niveau (10) pour la modification de la hauteur (H) du châssis (2) par rapport à l'au moins un essieu arrière (11) de telle sorte que la plaque d'attelage (5) du véhicule tracteur (1a) se rapproche de la plaque formant sellette (7) de la semi-remorque (1b) ;
- détermination en continu de valeurs de hauteur réelle (HIst) et de gradients de hauteur réelle (dHI) pendant la modification de la hauteur (H) du châssis (2) par rapport à l'au moins un essieu arrière (11), dans lequel le gradient de hauteur réelle (dHI) actuellement déterminé est associé à une valeur de hauteur réelle (HIst) ;
- vérification d'un critère d'attelage (AK) en comparant un gradient de hauteur réelle (dHI) actuellement déterminé avec un gradient de hauteur de référence (dHR), dans lequel le gradient de hauteur de référence (dHR) est utilisé, lequel, dans la courbe de hauteur de référence (HVR) lue, est associé à la même valeur de hauteur réelle (HIst) que le gradient de hauteur réelle (dHI) actuellement déterminé ;
- commande du système de régulation de niveau (10) pour le maintien de la hauteur (H) du châssis (2) par rapport à l'au moins un essieu arrière (11) lorsque le critère d'attelage (AK) est satisfait, dans lequel le critère d'attelage (AK) est satisfait lorsque le gradient de hauteur réelle (dHI) actuellement déterminé s'écarte du gradient de hauteur de référence (dHR).

17. Véhicule (1) selon la revendication 16, **caractérisé en ce que** l'appareil de commande d'attelage (14) est configuré pour recevoir les valeurs de hauteur réelle (HIst) en provenance d'un capteur de hauteur (13) du système de régulation de niveau (10).

18. Véhicule (1) selon la revendication 16 ou 17, **caractérisé en ce que** le bus de données (15) est un bus de données CAN (15a).
